# EUROPEAN PATENT SPECIFICATION

(11) **EP 0 640 776 B1**
(45) Date of publication and mention of the grant of the patent: **29.04.1998**
(21) Application number: 94113532.9
(22) Date of filing: 30.08.1994
(51) Int. Cl.: F16F 15/26, F02B 67/04, F16D 1/06, F02F 7/00

(54) **Balancing mechanism for an internal-combustion engine**
Auswuchtmechanismus für eine Brennkraftmaschine
Mécanisme d'équilibrage pour moteur à combustion interne

(30) Priority: 30.08.1993 JP 51668/93 U; 30.08.1993 JP 237406/93
(43) Date of publication of application: 01.03.1995
(73) Proprietor: HONDA GIKEN KOGYO KABUSHIKI KAISHA, Minato-ku Tokyo (JP)
(72) Inventor: Tsuno, Hiroshi c/o Kabushiki Kaisha Honda Gijutsu, Wako- shi, Saitama, Japan (JP); Satou, Tomoyasu c/o Kabushiki Kaisha Honda Gijutsu, Saitama, Japan (JP); Fukuzawa, Sumiko c/o Kabushiki Kaisha Honda, Saitama, Japan (JP); Nakano, Shinichi c/o Kabushiki Kaisha Honda, Saitama, Japan (JP); Yamaura, Hiroshi c/o Kabushiki Kaisha Honda, Saitama, Japan (JP); Narushima, Masazi c/o Kabushiki Kaisha Honda, Saitama, Japan (JP)
(74) Representative: Fincke, Karl Theodor, Dipl.-Phys. Dr.

(56) References cited:
- DE-A- 4 008 455
- GB-A- 2 104 971
- US-A- 1 691 408
- US-A- 4 617 885
- US-A- 4 688 313
- US-A- 5 064 040
- PATENT ABSTRACTS OF JAPAN vol. 7, no. 1 (M-183) (1146) 6 January 1983 & JP-A-57 161 333 (YAMAHA HATSUDOKI K.K.) 4 October 1982
- PATENT ABSTRACTS OF JAPAN vol. 18, no. 212 (M-1593) 15 April 1994 & JP-A-60 010 691 (MAZDA MOTOR CORP.) 18 January 1994
- PATENT ABSTRACTS OF JAPAN vol. 12, no. 64 (M-672) 26 February 1988 & JP-A-62 209 213 (MAZDA MOTOR CORP.) 14 September 1987

## Description

### BACKGROUND OF THE INVENTION

### Field of the Invention

The present device relates to a compact balancing mechanism for an internal-combustion engine, having a balancing shaft disposed as close as possible to the crankshaft of the internal-combustion engine. In addition, the present invention relates to an internal-combustion engine provided with a balancing shaft which is rotated synchronously with the crankshaft in a direction reverse to the direction in which the crankshaft rotates at the same angular velocity as that at which the crankshaft rotates to balance the primary component of the inertial force of a reciprocating mass.

### Description of Background Art

In a conventional balancing mechanism shown in Figure 4, Japanese Patent Laid-open (Kokai) JP-A-57 161 333 on which the preamble part of claim 1 is based, a crankshaft 03 and a balancing shaft 05 are supported for rotation in parallel to each other on a crankcase 01. A thrust flange 06 is formed on the balancing shaft 05 so as to be in sliding contact with the side surface of a bearing portion 02 of the crankcase 01 to restrain the balancing shaft 05 from axial movement. The balancing shaft 05 is provided integrally with balance weights 07. Each balance weight 07 is positioned between the two adjacent crank webs 04 of the crankshaft 03.

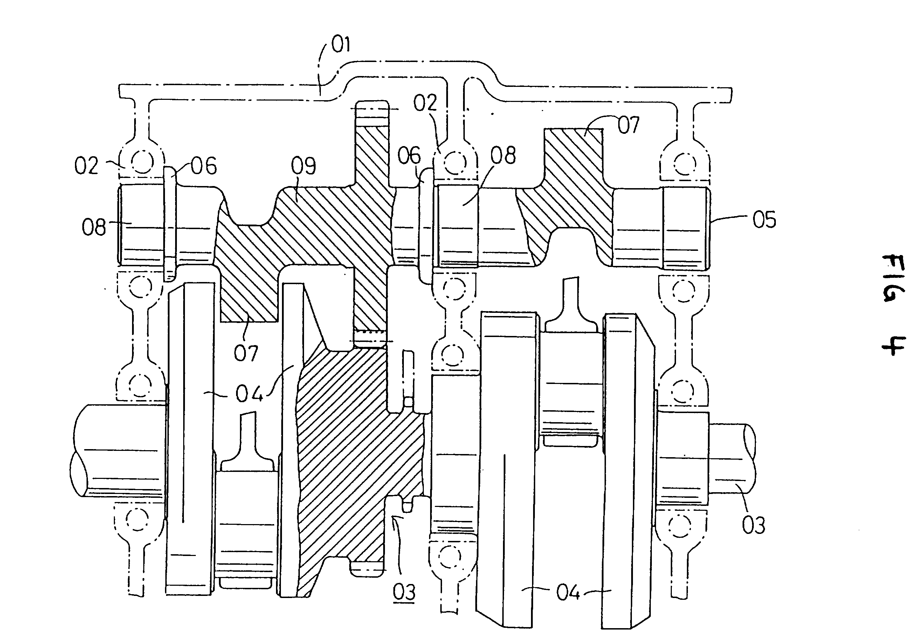

In the balancing mechanism shown in Figure 4, the diameter of the middle portion 09 of the balancing shaft 05 is equal to that of the journals 08 of the balancing shaft 05. Therefore, if the crankshaft 03 is disposed very close to the balancing shaft 05, the crank webs 04 of the crankshaft 03 collides against the middle portion 09 and the thrust flange 06 of the balancing shaft 05 and hence it is impossible to form the internal-combustion engine in a compact construction by disposing the balancing shaft 05 very close to the crankshaft 03.

In an internal-combustion engine provided with a balancing shaft to balance the primary component of the inertial force of a reciprocating mass, the balancing shaft and the crankshaft are interlocked by gears of the same dimensions mounted on the balancing shaft and the crankshaft so as to be meshed to drive the balancing shaft for rotation synchronous with the rotation of the crankshaft in a direction reverse to the direction of rotation of the crankshaft at the same angular velocity as that at which the crankshaft rotates.

The balancing shaft and the crankshaft are provided with balance weights, respectively, so that the fixed angular relation between the balance weights is maintained to suppress the vibrations of the internal-combustion engine by balancing the inertial force of the reciprocating mass. Therefore, the two gears are fixedly mounted on the balancing shaft and the crankshaft and positioned relative to the balancing shaft and the crankshaft, respectively, with respect to the direction of rotation. Particular teeth of the gears are marked with locating marks, respectively, and the angular relation between the balancing shaft and the crankshaft is determined by meshing the particular teeth marked with the locating marks.

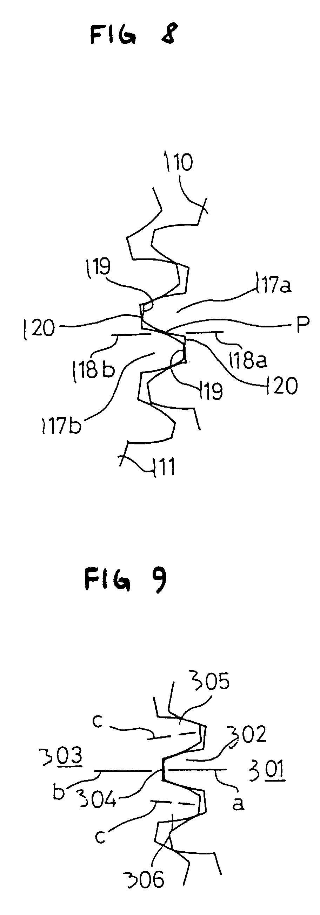

As illustrated in Figure 9, the particular teeth to be meshed are specified by marking a tooth 302 of one gear 301 with a locating mark a, and marking the bottom 304 of a space between two adjacent teeth of the other gear 303 on the opposite sides of the tooth 302 with a locating mark b or marking the two adjacent teeth with locating marks c.

Although those two gears are the same in dimensions and shape, the gears are marked differently. Therefore, two kinds of differently marked gears must be kept in stock and two differently marked gears must be used in combination, which requires complicated part management and troublesome assembling work.

If two similarly marked gears are used in combination, it is impossible to determine the correct tooth surface of a marked tooth of one of the two similarly marked gears with which a marked tooth of the other gear is brought into contact and hence there is the possibility that the gears are meshed erroneously with one of the two gears dislocated by an angle corresponding to the pitch of the teeth relative to the other gear.

### SUMMARY AND OBJECTS OF THE INVENTION

It is an object of the present invention to eliminate disadvantages of a balancing mechanism known from JP-A-57 161 333 by providing an improved balancing mechanism for an internal-combustion engine. This object is solved by the balancing mechanism for an internal combustion engine according to claim 1.

Since a portion of the crank web of the crankshaft corresponding to the thrust flange of the balancing shaft is recessed and the middle portion of the balancing shaft is formed to include a diameter smaller than those of the journals of the balancing shaft, the crankshaft can be disposed close to the balancing shaft without entailing interference between the crank web of the crankshaft and the balancing shaft. Consequently, mechanisms of the internal-combustion engine around the balancing mechanism can be formed in reduced dimensions and, consequently, the internal-combustion engine can be formed in a compact, lightweight construction.

Furthermore, since the diameters of the journals of the balancing shaft-are greater than that of the middle portion of the same, bearing pressure and eccentric load on the journals are reduced.

Further there may be provided a driving gear fixedly mounted on the crankshaft, and a driven gear fixedly mounted on the balancing shaft and in mesh with the driving gear. One particular tooth among the teeth of the driving gear and one particular tooth among the teeth of the driven gear that is brought into mesh with the particular tooth of the driving gear are marked respectively with identical locating marks so that the locating marks coincide with each other when a point on the tooth surface of one of the particular teeth corresponding to the middle point between the tip and the root of the same tooth and a point on the tooth surface of the other particular tooth corresponding to the middle point between the tip and the root of the same tooth are in contact with each other, and locating means for determining the angular position of the driving gear relative to the crankshaft and the angular position of the driven gear relative to the balancing shaft are provided at positions which are substantially point-symmetrical with respect to the point of contact between the two particular teeth when the two particular teeth are meshed.

The driving gear and the driven gear are perfectly identical with each other not only in dimensions including diameter and the number of teeth, but also in the position of the locating mark and shape and position of the positioning means.

Accordingly, two gears optionally selected from among a single type of gears are used respectively as the driving gear and the driven gear, which is advantageous in parts management and assembling work.

Since the locating marks on the teeth coincide with each other when a point on the tooth surface of one of the particular teeth corresponding to the middle point between the tip and the root of the tooth and a point on the tooth surface of the other particular tooth corresponding to the middle point between the tip and the root of the tooth are in contact with each other, it is possible to determine definitely the side of one of the particular teeth with which the other particular tooth is to be brought into contact and hence erroneous assembling work can be obviated.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention defined by claim 1 will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figure 1 is a longitudinal sectional view of a balancing mechanism in a preferred embodiment according to the present invention for an internal-combustion engine;
Figure 2 is a sectional plan view taken on line II-II in Figure 1;
Figure 3 is a sectional plan view of a balancing mechanism in another embodiment according to the present invention;
Figure 4 is a sectional plan view of a conventional balancing mechanism known from JP-A-57 161 333;
Figure 5 is a fragmentary longitudinal sectional view of an internal-combustion engine to which the present invention is applied;
Figure 6 is a front view of a driving gear and a driven gear in mesh with each other;
Figure 7 is a fragmentary sectional view for explaining a means for correctly positioning a gear on a shaft;
Figure 8 is a fragmentary front view of correctly meshed gears included in a balancing shaft driving mechanism in accordance with the present invention; and
Figure 9 is a fragmentary front view of correctly meshed gears included in a conventional balancing shaft driving mechanism.

### DETAILED DESCRIPTION OF THE PREFERRED EMBODIMENT

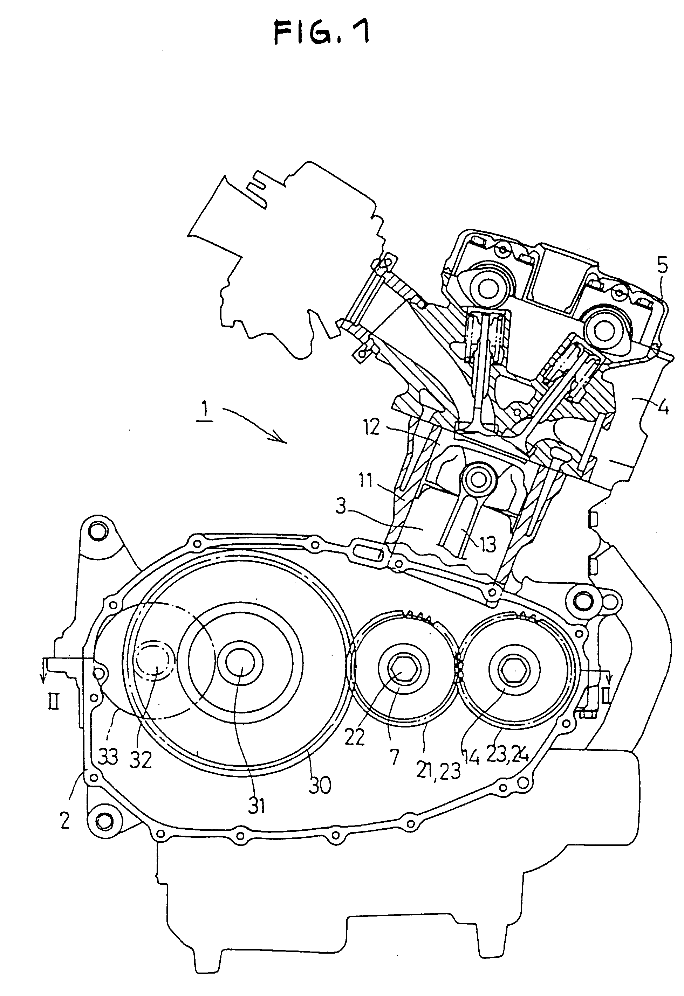

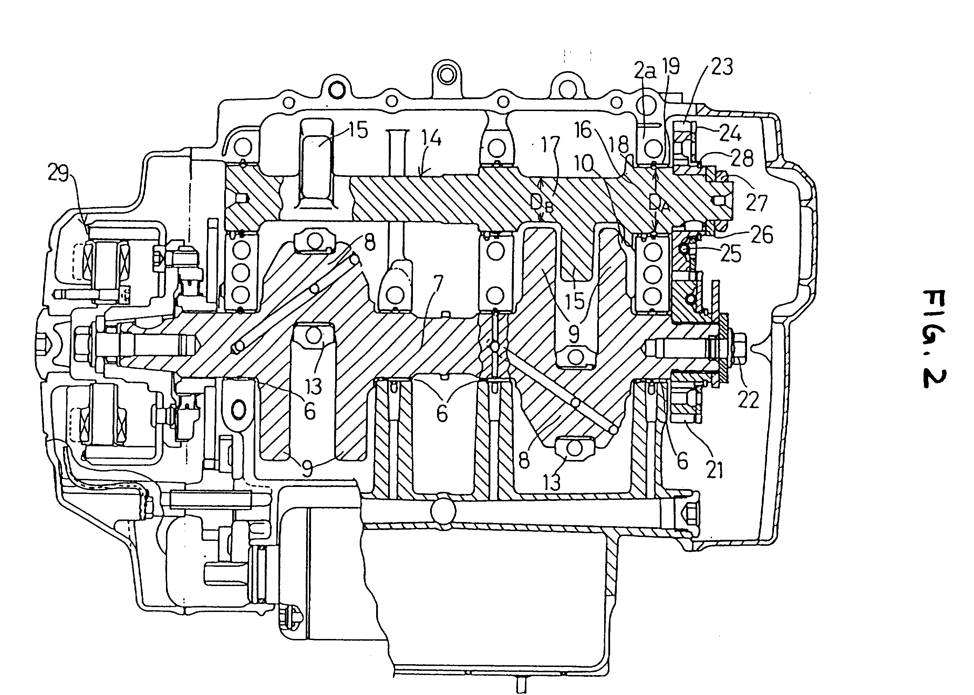

A balancing mechanism in a preferred embodiment according to the present device will be described with reference to Figures 1 and 2.

An overhead-camshaft type two-cylinder, four-cycle internal-combustion engine 1 of a motorcycle, not shown, has a crankcase 2 consisting of an upper case half and a lower case half joined together on a split plane, and a cylinder block 3 formed integrally with the upper case half. A crankshaft 7 is supported in plain bearings 6 on the split plane between the upper case half and the lower case half of the crankcase 2. A balancing shaft 14 has a journal 16 supported in a plain bearing 19 on the split plane, a cylinder head 4 is fixed to the upper end of the cylinder block 3, and a cylinder head cover 5 is fastened to the cylinder head 4.

Pistons 12 that reciprocate in cylinders 11 formed in the cylinder block 3 are connected to the crankshaft 7 by connecting rods 13 to drive the crankshaft 7 for rotation.

The balancing shaft 14 provided with balance weights 15 is extended so that each balance weight 15 is so positioned as to correspond to a crankpin 8 and a space between crank webs 9 of the crankshaft 7. The diameter D_{B} of the middle portion 17 of the balancing shaft 14 is smaller than the diameter D_{A} of the journal 16 of the balancing shaft 14.

A thrust flange 18 is formed integrally with the balancing shaft 14 at a position near the right end of the balancing shaft 14 so as to be in sliding contact with the inner side surface of a right-hand bearing portion of the crankcase 2, and a portion of the crank web 9 corresponding to the thrust flange 18 is recessed to form a depression 10.

A driving gear 21 is splined to the right end of the crankshaft 7 and fastened in place with a bolt 22. A driven gear 23, which is the same in outside diameter and the number of teeth as the driving gear 21, is splined to one end of the balancing shaft 14. A slash gear 24 is positioned on the driven gear 23 and is retained on the driven gear 23 with a snap ring 28, the driven gear 23 is fastened to the balancing shaft 14 through a washer 26 by a nut 27 screwed on the right end of the balancing shaft 14. Springs 25 are interposed between the driven gear 23 and the slash gear 24 to bias the slash gear 24 relative to the driven gear 23 in order that the driven gear 23 and the slash gear 24 are in mesh with the driving gear 21 without play.

A generator 29 is disposed on the left side of the crankshaft 7. The input gear 30 of a transmission is interlocked with the main shaft 31 of the transmission by a clutch, not shown, and the main shaft 31 is interlocked with the output shaft 32 of the transmission by a gear train, not shown. A driving sprocket wheel 33 is fixedly mounted on the output shaft 32, and a chain, not shown, is extended between the driving sprocket wheel 33 and a driven sprocket wheel, not shown, fixed to a rear wheel, not shown.

When the crankshaft 7 of the four-cycle internal-combustion engine 1 provided with the balancing mechanism shown in Figures 1 and 2 rotates, the axial inertial force of the crankpins 8 and the pistons 12 acting in directions parallel to the center axes of the cylinders 11 is counterbalanced by the inertial force of the crank webs 9. The lateral inertial force of the crankpins 8 acting in directions parallel to an axis perpendicular to the center axes of the cylinders 11 is counterbalanced by the inertial force of the balance weights 15 to suppress the vibration of the four-cycle internal-combustion engine 1.

Since a portion of the crank web 9 of the crankshaft 7 corresponding to the thrust flange 18 for restraining the balance shaft 14 from axial movement is recessed to form the depression 10, and the diameter D_{B} of the middle portion 17 of the balancing shaft 14 is smaller than the diameter D_{A} of the journals 16 of the same, the balancing shaft 14 can be disposed close to the crankshaft 7. Therefore, the four-cycle internal-combustion engine 1 has a comparatively small longitudinal size and is formed in a compact, lightweight construction.

Since the diameter of the journals 16 of the balancing shaft 14 is comparatively large, the bearing pressure acting on the journals 16 is comparatively small and hence the load on the plain bearings 19 is comparatively small.

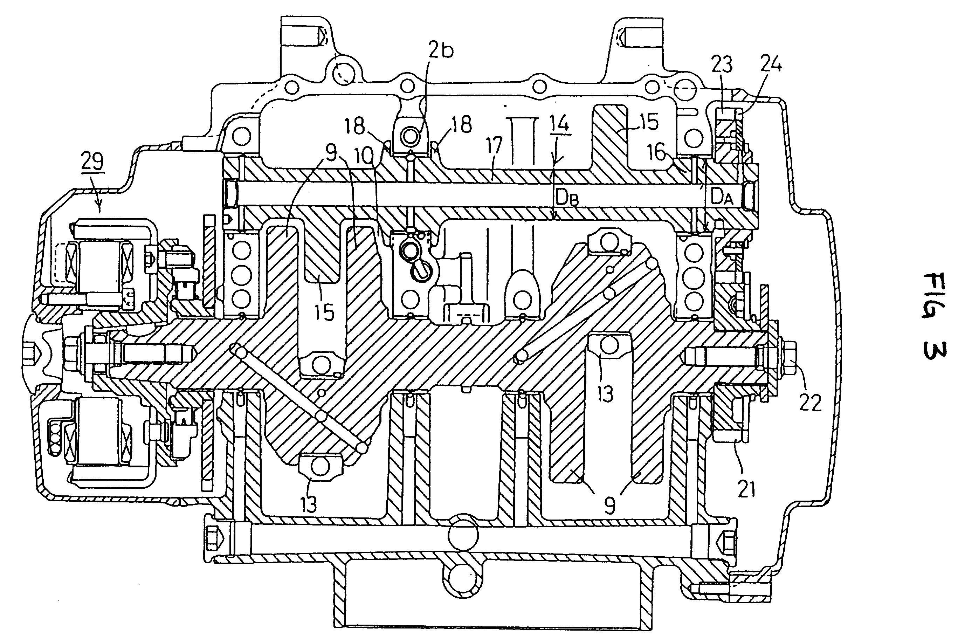

Although the balancing shaft 14 of the balancing mechanism shown in Figures 1 and 2 is provided with the thrust flange 18 near the right end thereof, crankcase 2 may be provided with a left-hand intermediate bearing portion 2b as illustrated in Figure 3. The balancing shaft 14 may be provided with thrust flanges 18 so as to be in sliding contact with the opposite side surfaces of the left-hand intermediate bearing portion 2b. A portion of the right side of the crank web 9 of the crankshaft 7 corresponding to the left piston 12 may be recessed to form a depression 10 corresponding to the left-hand thrust flange 18 as shown in Figure 3.

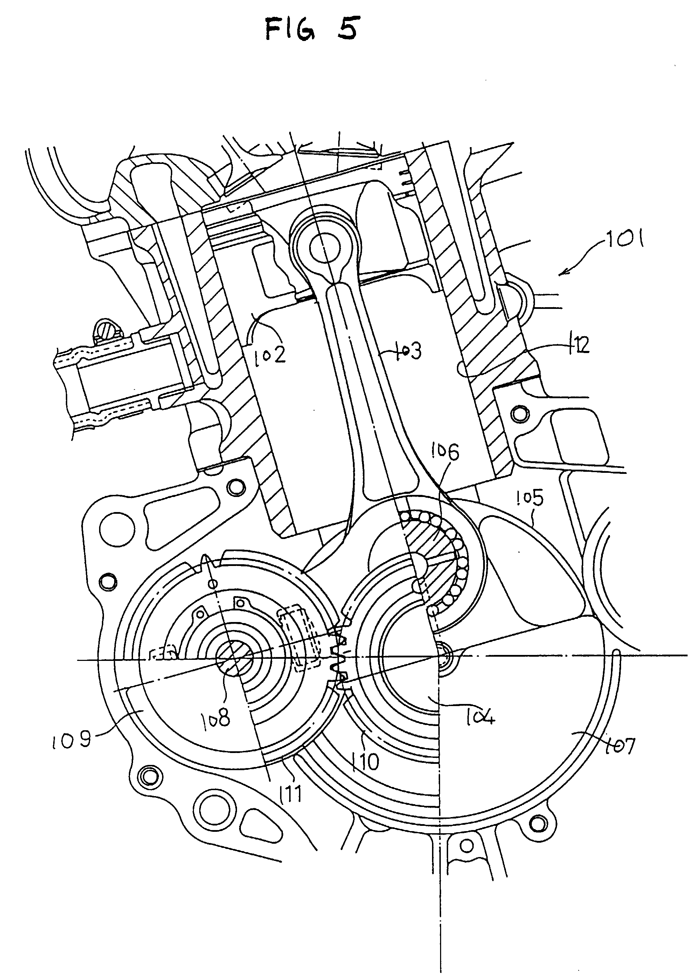

Figure 5 is a fragmentary longitudinal sectional view of an internal-combustion engine 101 to which the present invention is applied. In Figure 5, a piston 102 is operatively connected to a connection rod 103 which is connected to a crankshaft 104. The large end of the connecting rod 103 is connected to a crankpin 106 on the crank web 105 of the crankshaft 104. A balance weight 107 is formed integrally with the crank web 105 opposite to the crankpin 106 with respect to the axis of the crankshaft 104.

A balancing shaft 108 extends in parallel to the crankshaft 104. The balancing shaft 108 is provided with a balance weight 109. A driving gear 110 securely mounted on the crankshaft 104 and a driven gear 111 securely mounted on the balancing shaft 108 are operatively meshed to connect the crankshaft 104 and the balancing shaft 108. The driving gear 110 and the driven gear 111 have the same diameter and the same number of teeth. Therefore, the balancing shaft 108 rotates synchronously with the crankshaft 104 in a direction opposite the direction of rotation of the crankshaft 104 at the same angular velocity as that at which the crankshaft 104 rotates.

As shown in Figure 5, the balance weight 107 is positioned opposite to the piston 102 with respect to the crankshaft 104 and the balance weight 109 is on the same side as the balance weight 107 with respect to the balancing shaft 108 when the piston 102 is at the top dead center. The balance weights 107 and 109 rotate together with the crankshaft 104 and the balancing shaft 108 in opposite directions, respectively, to counterbalance the inertial force of the reciprocating masses, i.e., the masses of the piston 102, the connecting rod 103 and such.

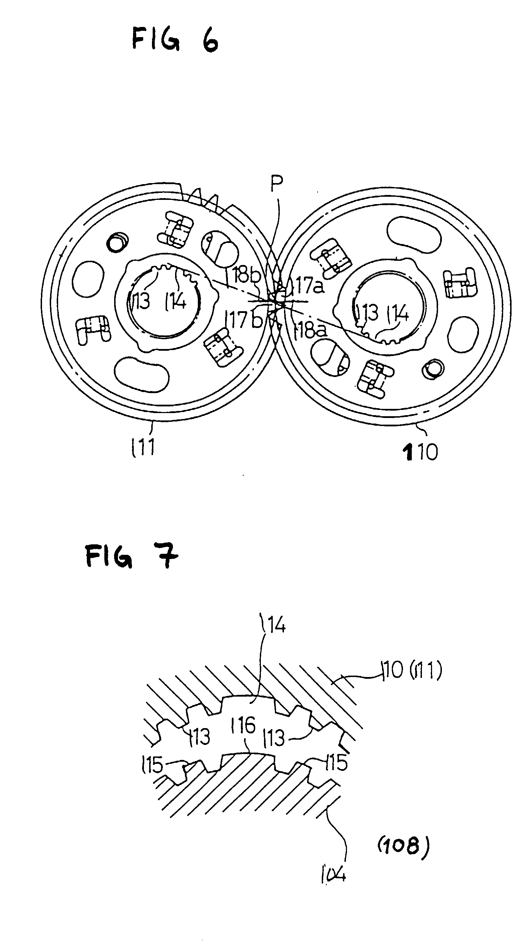

As shown in Figure 6, the gears 110 and 111 are splined to the crankshaft 104 and the balancing shaft 108, respectively, and the gears 110 and 111 are provided with internal splines 113. One of the internal splines 113 of each of the gears 110 and 111 is removed to form a locating groove 114. The crankshaft 104 and the balancing shaft 108 are provided with external splines 115 that mate with the internal splines 113 of the gears 110 and 111, respectively. As shown in Figure 7, the two adjacent external splines 115 of each of the crankshaft 104 and the balancing shaft 108 are joined together to form a locating ridge 116 that fits the locating groove 114. Therefore, the gears 110 and 111 can be put on the crankshaft 104 and the balancing shaft 108 only when the locating grooves 114 coincide with the locating ridges 116 of the crankshaft 104 and the balancing shaft 108, respectively. Thus, the angular positions of the gears 110 and 111 on the crankshaft 104 and the balancing shaft 108 are fixed.

The respective angular positions of the driving gear 110 and the driven gear 111 on the crankshaft 104 and the balancing shaft 108 are determined by putting the driving gear 110 and the driven gear 111 on the crankshaft 104 and the balancing shaft 108 with the locating ridges 116 fitted in the corresponding locating grooves 114, respectively.

Figure 6 shows a state where the balance weights 107 and 109 have been set at the angular positions shown in Figure 5 by turning the crankshaft 104 and the balancing shaft 108 together with the gears 110 and 111. A particular tooth 117a of the driving gear 110 and a particular tooth 117b of the driven gear 111 are meshed with each other. In this state, locating marks 118a and 118b on the particular teeth 117a and 117b coincide with each other.

After putting the driving gear 110 and the driven gear 111 on the crankshaft 104 and the balancing shaft 108 with the locating ridges 116 of the crankshaft 104 and the balancing shaft 108 fitted in the corresponding locating grooves 114, respectively, the driving gear 110 and the driven gear 111 are turned together with the crankshaft 104 and the balancing shaft 108 to mesh the tooth 117a marked with the locating mark 118a and the tooth 117b of the driven gear 111 marked with the locating mark 118b, to connect the crankshaft 104 and the balancing shaft 108 in a given angular relation. It is also possible to position the crankshaft 104 properly provided with the driving gear 110 at an angular position shown in Figure 5, to position the driven gear 111 with its tooth 117b in mesh with the tooth 117a of the driving gear 110, to set the balancing shaft 108 at an angular position where the positioning ridge 116 of the balancing shaft 108 is received in the locating groove 114 of the driven gear 111, and to mount the driven gear 111 on the balancing shaft 108.

Although the locating marks 118a and 118b need not necessarily be marked on the teeth that are meshed when the piston 102 is at the top dead center and the balancing shaft 108 is at a corresponding angular position meeting the given angular relation between the crankshaft 104 and the balancing shaft 108 and may be marked on the teeth that are meshed when the piston 102 is at any position and the crankshaft 104 and the balancing shaft are in an angular relation corresponding to the given angular relation, the assembling work can more easily be carried out when the locating marks are marked on a tooth of the driving gear 110 and a tooth of the driven gear 111 that are in mesh when the balance weight 107 is at a position corresponding to the position of the piston 102 at the top dead center or the bottom dead center and the balance weight 107 is at a position corresponding to the position of the balance weight 107.

As shown in Figure 6, the locating groove 114 of the driving gear 110 and the locating groove 114 of the driven gear 111 are substantially in a point-symmetrical relation with respect to the point P of engagement of the teeth 117a and 117b. That is, the locating grooves 114 are on a straight line passing the point P at equal distances from the point P, respectively.

As shown in Figure 8, the locating marks 118a and 118b are short lines that are aligned with each other when a point on the tooth surface of the particular tooth 117a corresponding to the middle point between the tip 119 and the root 120 of the particular tooth 117a and a point on the tooth surface of the particular tooth 117b corresponding to the middle point between the tip 119 and the root 120 of the particular tooth 117b are in contact with each other.

The driving gear 110 and the driven gear 111 are perfectly identical with each other, which will readily be understood if the driven gear 111 is turned through an angle of 180° from the position shown in Figure 6 and superposed on the driving gear 110.

When assembling the balancing shaft driving mechanism, two optional gears taken out from stock of the same gears can be used as the driving gear and the driven gear. Therefore, the kinds of parts are reduced to facilitate parts management. Any particular attention need not be paid to the selection and combination of the gears during assembling work and hence the efficiency of assembling work can be improved.

Since it is possible to know definitely on which side of the particular tooth 117b the particular tooth 117a must be placed, there is no possibility that the gears are engaged erroneously.

According to the present invention, the balancing shaft driving mechanism is provided with the driving gear and the driven gear which are perfectly identical with each other. Therefore, only a single kind of gear must be kept in stock, which is advantageous to parts management and assembling work. Furthermore, the driving gear and the driven gear are never mounted on the crankshaft and the balancing shaft, respectively, in a wrong arrangement.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A balancing mechanism for an internal-combustion engine, having a crankcase (2) and a crankshaft (7) supported for rotation within said crankcase (2), said balancing mechanism comprising:
- a balancing shaft (14) supported for rotation within said crankcase (2) in an operative arrangement relative to said crankshaft (7), said balancing shaft (14) including a middle portion (17) and journal ends (16), said middle portion (17) of said balancing shaft (14) having a diameter (D_{B}) smaller relative to a diameter (D_{A}) of the journal ends (16),
- balance weights (15) positioned on said balancing shaft (14) in positions corresponding to crank pins (8) of the crankshaft (7),
- a thrust flange (18) formed on the balancing shaft (14) contiguously with at least one of the journal ends (16) to restrain the blancing shaft (14) from axial movement, so as to be in sliding contact with a side surface of a bearing portion of the crank case (2), supporting the balancing shaft (14),
characterized by a recess (10) formed in a portion of the crank web (9) of the crankshaft (7), said recess (10) corresponding to the thrust flange (18) of the balancing shaft (14), and in that said crank web (9) of the crankshaft (7) and the journals (16) of the balancing shaft (14) are partly overlapping each other as viewed along the axis of the balancing shaft (14).

2. The balancing mechanism for an internal-combustion engine according to claim 1, wherein said recess (10) is a depression (10) formed on a side surface of said crank web (9) of said crankshaft (7) to permit said thrust flange (18) to be received therein while providing sufficient space to enable said crank web (9) of said crankshaft (7) to rotate relative to said balancing shaft (14) without engagement therebetween.

3. The balancing mechanism for an internal-combustion engine according to claim 1, wherein said thrust flange (18) is formed on a first end of said balancing shaft (14) and further including a driven gear (23) operatively connected to said first end of said balancing shaft (14) and a driving gear (21) operatively connected to a first end of said crankshaft (7), said driving gear (21) being in meshing engagement with said driven gear (23) to impart rotation thereto.

4. The balancing mechanism for an internal-combustion engine according to claim 1, wherein said crank webs (9) of said crankshaft (7) include a space therebetween for accommodating said balance weights (15) of said balancing shaft (14).

5. The balancing mechanism for an internal-combustion engine according to claim 1, and further including a bearing operatively mounted at a predetermined position along a length of said middle portion (17) of said balancing shaft (14).

6. The balancing mechanism for an internal-combustion engine according to claim 1, wherein said crankshaft (7), includes at least two crank webs (9) and said balancing shaft (14) includes at least two balance weights (15) operatively positioned relative to each other.

7. The balancing mechanism for an internal-combustion engine according to claim 1, further comprising a balancing shaft driving mechanism for driving said balancing shaft (108) for rotation synchronously with said crankshaft (104) of the internal-combustion engine at an angular velocity equal to the angular velocity of the crankshaft (104) in a direction opposite to the direction of rotation of the crankshaft (104), said balancing shaft driving mechanism comprising:
a driving gear (110) having a plurality of teeth and being securely mounted on the crankshaft (104), and a driven gear (111) having a plurality of teeth and being securely mounted on the balancing shaft (108) and in mesh with the driving gear (110);
one particular tooth (117a) among the teeth of the driving gear (110) and one particular tooth (117b) among the teeth of the driven gear (111) brought into mesh with the particular tooth (117a) of the driving gear (110) are marked respectively with identical locating marks (118a, 118b) so that the locating marks (118a, 118b) coincide with each other when a point on the tooth surface of one of the particular teeth (117a, 117b) corresponding to the middle point between the tip and the root of the same particular tooth and a point on the tooth surface of the other particular tooth corresponding to the middle point between the tip and the root of the same particular tooth are in contact with each other; and
locating means (114, 116) for determining the angular position of the driving gear (110) relative to the crankshaft (104) and the angular position of the driven gear (111) relative to the balancing shaft (108), said locating means (114, 116) being disposed at positions which are substantially point-symmetrical with respect to the point of contact between the two particular teeth (117a, 117b) when the two particular teeth (117a, 117b) are meshed.

8. The balancing mechanism for an internal-combustion engine according to claim 7, wherein said locating means (114, 116) includes a ridge (116) positioned on one of said driving gear (110) and said crankshaft (104) and a groove (114) positioned in a corresponding one of said crankshaft (104) and said driving gear (110).

9. The balancing mechanism for an internal-combustion engine according to claim 7, wherein said locating means (114, 116) includes a ridge (116) positioned on one of said driven gear (111) and said balancing shaft (108) and a groove (114) positioned in a corresponding one of said balancing shaft (108) and said driven gear (111).

10. The balancing mechanism for an internal-combustion engine according to claim 7, wherein the locating marks (118a, 118b) are lines aligned with each other when a point on the tooth surface of one of the particular teeth (117a, 117b) corresponding to the middle point between the tip and the root of the same particular tooth and a point on the tooth surface of the other particular tooth corresponding to the middle point between the tip and the root of the same particular tooth are in contact with each other.

11. The balancing mechanism for an internal-combustion engine according to claim 7, wherein said driving gear (110) and said driven gear (111) are identical with respect to each other.

12. The balancing mechanism for an internal-combustion engine according to claim 1, wherein said crankcase (2) consists of an upper case-half and a lower case-half, said crankshaft (7) being supported for rotation on a split plane between the mating surfaces of the upper case-half and the lower case-half of the crankcase (2), and said balancing shaft (14) being supported on said crankcase (2) for rotation on the split plane.

## Patentansprüche

1. Ausgleichsmechanismus für eine Brennkraftmaschine mit einem Kurbelgehäuse (2) und einer Kurbelwelle (7), welche zur Drehung innerhalb des Kurbelgehäuses (2) getragen ist, wobei der Ausgleichsmechanismus umfaßt:
- eine Ausgleichswelle (14), welche zur Drehung innerhalb des Kurbelgehäuses (2) in einer betriebsmäßigen Anordnung bezüglich der Kurbelwelle (7) getragen ist, wobei die Ausgleichswelle (14) einen mittleren Abschnitt (17) und Lagerungsenden (16) umfaßt, wobei der mittlere Abschnitt (17) der Ausgleichswelle (14) einen Durchmesser (D_{B}) aufweist, welcher bezüglich eines Durchmessers (D_{A}) der Lagerungsenden (16) kleiner ist,
- Ausgleichsgewichte (15), welche an der Kurbelwelle (14) an Positionen angebracht sind, welche Kurbelzapfen (8) der Kurbelwelle (7) entsprechen,
- einen Axialanlageflansch (18), welcher an der Ausgleichswelle (14) benachbart wenigstens einem der Lagerungsenden (16) ausgebildet ist, um die Ausgleichswelle (14) gegen Axialbewegung zu sichern, so daß dieser in Gleitkontakt mit einer Seitenfläche eines Lagerabschnitts des Kurbelgehäuses (2) ist, welches die Ausgleichswelle (14) trägt,
gekennzeichnet durch eine Ausnehmung (10), welche in einem Abschnitt der Kurbelwange (9) der Kurbelwelle (7) ausgebildet ist, wobei die Ausnehmung (10) dem Axialanlageflansch (18) der Ausgleichswelle (14) entspricht, und dadurch, daß die Kurbelwange (9) der Kurbelwelle (7) und die Lagerungsabschnitte (16) der Ausgleichswelle (14) sich bei Betrachtung entlang der Achse der Ausgleichswelle (14) teilweise überlappen.

2. Ausgleichsmechanismus für eine Brennkraftmaschine nach Anspruch 1, worin die Ausnehmung (10) eine Einsenkung (10) ist, welche an einer Seitenfläche der Kurbelwange (9) der Kurbelwelle (7) gebildet ist, um zu ermöglichen, daß der Axialanlageflansch (18) darin aufgenommen ist, während ausreichend Raum vorgesehen ist, um zu ermöglichen, daß die Kurbelwange (9) der Kurbelwelle (7) sich bezüglich der Ausgleichswelle (14) ohne gegenseitiges Angreifen zwischen diesen dreht.

3. Ausgleichsmechanismus für eine Brennkraftmaschine nach Anspruch 1, worin der Axialanlageflansch (18) an einem ersten Ende der Ausgleichswelle (14) ausgebildet ist, ferner umfassend ein angetriebenes Zahnrad (23), welches betriebsmäßig mit dem ersten Ende der Ausgleichswelle (14) verbunden ist, und ein Antriebszahnrad (21), welches betriebsmäßig mit einem ersten Ende der Kurbelwelle (7) verbunden ist, wobei das Antriebszahnrad (21) in Kämmeingriff mit dem angetriebenen Zahnrad (23) steht, um dieses in Drehung zu versetzen.

4. Ausgleichsmechanismus für eine Brennkraftmaschine nach Anspruch 1, worin die Kurbelwangen (9) der Kurbelwelle (7) zwischen sich einen Raum aufweisen, um die Ausgleichsgewichte (15) der Ausgleichswelle (14) aufzunehmen.

5. Ausgleichsmechanismus für eine Brennkraftmaschine nach Anspruch 1, ferner umfassend ein Lager, welches betriebsmäßig an einer bestimmten Position entlang eines Längenabschnitts des mittleren Abschnitts (17) der Ausgleichswelle (14) angebracht ist.

6. Ausgleichsmechanismus für eine Brennkraftmaschine nach Anspruch 1, worin die Kurbelwelle (7) wenigstens zwei Kurbelwangen (9) umfaßt und die Ausgleichswelle (14) wenigstens zwei Ausgleichsgewichte (15) umfaßt, die betriebsmäßig bezüglich einander positioniert sind.

7. Ausgleichsmechanismus für eine Brennkraftmaschine nach Anspruch 1, ferner umfassend einen Ausgleichswellenantriebsmechanismus zum Antreiben der Ausgleichswelle (108) zur Drehung synchron mit der Kurbelwelle (104) der Brennkraftmaschine mit einer Winkelgeschwindigkeit, welche gleich der Winkelgeschwindigkeit der Kurbelwelle (104) ist, in einer Richtung entgegengesetzt zur Drehrichtung der Kurbelwelle (104), wobei der Ausgleichswellenantriebsmechanismus umfaßt:
ein Antriebszahnrad (110), das eine Mehrzahl von Zähnen aufweist und fest an der Kurbelwelle (104) angebracht ist, und ein angetriebenes Zahnrad (111), das eine Mehrzahl von Zähnen aufweist und das fest an der Ausgleichswelle (108) angebracht ist und mit dem Antriebszahnrad (110) kämmt,
wobei ein bestimmter Zahn (117a) der Zähne des Antriebszahnrads (110) und ein bestimmter Zahn (117b) der Zähne des angetriebenen Zahnrads (111), welcher in Kämmeingriff mit dem bestimmten Zahn (117a) des Antriebszahnrads (110) gebracht ist, jeweils mit identischen Positioniermarkierungen (118a, 118b) markiert sind, so daß die Positioniermarkierungen (118a, 118b) miteinander übereinstimmen, wenn ein Punkt an der Zahnoberfläche von einem der bestimmten Zähne (117a, 117b), welcher dem Mittelpunkt zwischen der Spitze und der Wurzel desselben bestimmten Zahns entspricht, und ein Punkt an der Zahnoberfläche des anderen bestimmten Zahns, welcher dem Mittelpunkt zwischen der Spitze und der Wurzel desselben bestimmten Zahns entspricht, miteinander in Kontakt stehen, und ein Positioniermittel (114, 116) zum Bestimmen der Winkelstellung des Antriebszahnrads (110) bezüglich der Kurbelwelle (104) und der Winkelstellung des angetriebenen Zahnrads (111) bezüglich der Ausgleichswelle (108), wobei das Positioniermittel (114, 116) an Positionen angeordnet ist, welche im wesentlichen punktsymmetrisch bezüglich des Berührungspunkts zwischen den beiden bestimmten Zähnen (117a, 117b) sind, wenn die beiden bestimmten Zähne (117a, 117b) kämmen.

8. Ausgleichsmechanismus für eine Brennkraftmaschine nach Anspruch 7, worin das Positioniermittel (114, 116) einen Scheitel (116) umfaßt, der an einem Element von Antriebszahnrad (110) und Kurbelwelle (104) angeordnet ist, und eine Nut (114) umfaßt, welche an einem entsprechenden Element von Kurbelwelle (104) und Antriebszahnrad (110) angeordnet ist.

9. Ausgleichsmechanismus für eine Brennkraftmaschine nach Anspruch 7, worin das Positioniermittel (114, 116) einen Scheitel (116) umfaßt, welcher an einem Element von angetriebenem Zahnrad (111) und Ausgleichswelle (108) angeordnet ist, und eine Nut (114) umfaßt, welche an einem entsprechenden Element von Ausgleichswelle (108) und angetriebenem Zahnrads (111) angeordnet ist.

10. Ausgleichsmechanismus für eine Brennkraftmaschine nach Anspruch 7, worin die Positioniermarkierungen (118a, 118b) Linien sind, welche zueinander ausgerichtet sind, wenn ein Punkt an der Zahnoberfläche von einem der bestimmten Zähne (117a, 117b), welcher dem Mittelpunkt zwischen der Spitze und der Wurzel desselben bestimmten Zahns entspricht, und ein Punkt an der Zahnoberfläche des anderen bestimmten Zahns, welcher dem Mittelpunkt zwischen der Spitze und der Wurzel desselben bestimmten Zahns entspricht, einander berühren.

11. Ausgleichsmechanismus für eine Brennkraftmaschine nach Anspruch 7, worin das Antriebszahnrad (110) und das angetriebene Zahnrad (111) zueinander identisch sind.

12. Ausgleichsmechanismus für eine Brennkraftmaschine nach Anspruch 1, worin das Kurbelgehäuse (2) aus einer oberen Gehäusehälfte und einer unteren Gehäusehälte gebildet ist, wobei die Kurbelwelle (7) zur Drehung in einer Trennebene zwischen den aneinander passenden Oberflächen der oberen Gehäusehälfte und der unteren Gehäusehälfte des Kurbelgehäuses (2) getragen ist, und wobei die Ausgleichswelle (14) an dem Kurbelgehäuse (2) zur Drehung in der Trennebene getragen ist.

## Revendications

1. Mécanisme d'équilibrage pour moteur à combustion interne, ayant un carter moteur (2) et un vilebrequin (7) supporté pour tourner à l'intérieur du dit carter moteur (2), ledit mécanisme d'équilibrage comprenant :
un arbre d'équilibrage (14) supporter pour tourner à l'intérieur du dit carter moteur (2) dans un aménagement de fonctionnement par rapport au dit vilebrequin (7), ledit arbre d'équilibrage (14) comprenant une partie médiane (17) et des extrémités de portée (16), ladite partie médiane (17) de l'arbre d'équilibrage (14) ayant un diamètre (DB) inférieur à un diamètre (DA) des extrémités de portée (16), des masselottes (15) positionnées sur ledit arbre d'équilibrage (14) dans des positions correspondant aux manetons (8) du vilebrequin (7),
une bride de butée (18) formée sur l'arbre d'équilibrage (14) de manière contiguë à au moins l'une des extrémités de portée (16), afin d'empêcher un mouvement axial de l'arbre d'équilibrage (14), de manière à être en contact de glissement avec une surface latérale d'une partie de palier du carter moteur (2), supportant l'arbre d'équilibrage (14),
caractérisé par un retrait (10) formé dans une partie du flasque (9) du vilebrequin (7), ledit retrait (10) correspondant à la bride de butée (18) de l'arbre d'équilibrage (14), et en ce que ledit flasque (9) du vilebrequin (7) et les portées (16) de l'arbre d'équilibrage (14) se recouvrent en partie les uns les autres, lorsqu'il sont vus dans l'axe de l'arbre d'équilibrage (14).

2. Mécanisme d'équilibrage pour moteur à combustion interne selon la revendication 1, dans lequel ledit retrait (10) est un renfoncement (40) formé sur une surface latérale du dit flasque (9) du dit vilebrequin (7), afin de permettre la réception de ladite bride de butée (18) dans celui-ci tout en fournissant un espace suffisant pour permettre la rotation du dit flasque (9) du dit vilebrequin (7) par rapport au dit arbre d'équilibrage (14) sans engagement entre eux.

3. Mécanisme d'équilibrage pour moteur à combustion interne selon la revendication 1, dans lequel ladite bride de butée (18) est formée sur une première extrémité du dit arbre d'équilibrage (14) et comprenant en outre un pignon mené (23) connecté en fonctionnement à ladite première extrémité du dit arbre d'équilibrage (14) et un pignon d'entraînement (21) connecté en fonctionnement à une première extrémité du dit vilebrequin (7), ledit pignon d'entraînement (21) s'engageant par engrènement avec ledit pignon mené (23) pour communiquer une rotation à celui-ci.

4. Mécanisme d'équilibrage pour moteur à combustion interne selon la revendication 1, dans lequel lesdits flasques (9) du dit vilebrequin (7) comprennent entre eux un espace destiné à de recevoir lesdites masselottes (15) du dit arbre d'équilibrage (14).

5. Mécanisme d'équilibrage pour moteur à combustion interne selon la revendication 1, et comprenant en outre un palier monté en fonctionnement à une position prédéterminée sur une longueur de ladite partie médiane (17) du dit arbre d'équilibrage (14).

6. Mécanisme d'équilibrage pour moteur à combustion interne selon la revendication 1, dans lequel ledit vilebrequin (7) comprend au moins deux flasques (9) et ledit arbre d'équilibrage (14) comprend au moins deux masselottes (15) positionnées en fonctionnement l'une par rapport à l'autre.

7. Mécanisme d'équilibrage pour moteur à combustion interne selon la revendication 1, comprenant en outre un mécanisme d'entraînement d'arbre d'équilibrage destiné à entraîner ledit arbre d'équilibrage (108) pour une rotation synchrone avec ledit vilebrequin (104) du moteur à combustion interne à une vitesse angulaire identique à la vitesse angulaire du vilebrequin (104) dans un sens opposé au sens de rotation du vilebrequin (104), ledit mécanisme d'entraînement d'arbre d'équilibrage comprenant :
un pignon d'entraînement (110) comprenant une pluralité de dents et étant monté de manière fixe sur le vilebrequin (104), et un pignon mené (111) comportant une pluralité de dents et étant monté de manière fixe sur l'arbre d'équilibrage (108) et en engrènement avec le pignon d'entraînement (110);
une dent particulière (117a) parmi les dents du pignon d'entraînement (110) et une dent particulière (117b) parmi les dents du pignon mené (111) amenée en engrènement avec la dent particulière (117a) du pignon d'entraînement (110) sont marquées respectivement avec des repères de positionnement identiques (118a, 118b), de sorte que les repères de positionnement (118a, 118b) coïncident l'un avec l'autre lorsqu'un point sur la surface de dent de l'une des dents particulières (117a, 117b) correspondant au point médian entre la pointe et la racine de la même dent particulière et un point sur la surface de dent de l'autre dent particulière correspondant au point médian entre la pointe et la racine de la même dent particulière sont en contact l'un avec l'autre; et
des moyens de positionnement (114, 116) destinés à déterminer la position angulaire du pignon d'entraînement (110) par rapport au vilebrequin (104) et la position angulaire du pignon mené (111) par rapport à l'arbre d'équilibrage (108), lesdits moyens de positionnement étant placés à des positions dans lesquelles les points sont essentiellement symétriques par rapport au point de contact entre les deux dents particulières (117a, 117b), lorsque les deux dents particulières (117a, 117b) sont en engrènement.

8. Mécanisme d'équilibrage pour moteur à combustion interne selon la revendication 7, dans lequel lesdits moyens de positionnement (114, 116) comprennent une arête (116) positionnée sur l'un des dit pignon d'entraînement (110) et dit vilebrequin (104) et une gorge (114) positionnée dans l'un des dit vilebrequin (104) et dit pignon d'entraînement (110) correspondants.

9. Mécanisme d'équilibrage pour moteur à combustion interne selon la revendication 7, dans lequel lesdits moyens de positionnement (114, 116) comprennent une arête (116) positionnée sur l'un des dit pignon mené (111) et dit arbre d'équilibrage (108) et une gorge (114) positionnée dans l'un des dit arbre d'équilibrage (108) et dit pignon mené (104) correspondants.

10. Mécanisme d'équilibrage pour moteur à combustion interne selon la revendication 7, dans lequel les repères de positionnement (118a, 118b) sont des lignes en alignement l'une par rapport à l'autre, lorsqu'un point sur la surface de dent de l'une des dents particulières (117a, 117b) correspondant au point médian entre la pointe et la racine de la même dent particulière et un point sur la surface de dent de l'autre dent particulière correspondant au point médian entre la pointe et la racine de la même dent particulière sont en contact l'un avec l'autre.

11. Mécanisme d'équilibrage pour moteur à combustion interne selon la revendication 7, dans lequel ledit pignon d'entraînement (110) et ledit pignon mené (111) sont identiques l'un par rapport à l'autre.

12. Mécanisme d'équilibrage pour moteur à combustion interne selon la revendication 1, dans lequel ledit carter moteur (2) se compose d'un demi carter supérieur et d'un demi carter inférieur, ledit vilebrequin (7) étant supporté pour tourner sur un plan de séparation entre les surfaces d'accouplement du demi carter supérieur et du demi carter inférieur du carter moteur (2), ledit arbre d'équilibrage (14) étant supporté sur ledit carter moteur (2) pour tourner sur le plan de séparation.
